# FASCICULE DE BREVET EUROPEEN

(11) **EP 2 826 709 B1**
(45) Date de publication et mention de la délivrance du brevet: **24.08.2016**
(21) Numéro de dépôt: 14002129.6
(22) Date de dépôt: 20.06.2014
(51) Int. Cl.: B64C 27/12, B64D 27/14, F02C 7/26

(54) **Installation motrice modulaire et aéronef muni d'un rotor de sustentation**
Modulare Antriebsanlage und Luftfahrzeug mit einem Auftriebsrotor
Modular power plant and aircraft provided with a lift rotor

(30) Priorité: 16.07.2013 FR 1301681
(43) Date de publication de la demande: 21.01.2015
(73) Titulaire: Airbus Helicopters, 13725 Marignane Cedex (FR)
(72) Inventeur: Honnorat, Olivier, F-13290 AIX EN Provence (FR)
(74) Mandataire: GPI & Associés

(56) Documents cités:
- FR-A1- 2 905 983
- GB-A- 940 024
- US-A- 5 054 716
- US-A- 5 823 470
- US-A1- 2005 115 770
- US-A1- 2011 121 127

## Description

La présente invention concerne une installation motrice modulaire ainsi qu'un aéronef muni d'un rotor de sustentation entraîné en rotation par cette installation motrice.

Une installation motrice d'un tel aéronef comporte usuellement un moteur à turbine entraînant une boîte de transmission de puissance principale.

Usuellement, un moteur à turbine comprend une turbine à gaz possédant un générateur de gaz mettant en rotation une turbine de travail. Cette turbine de travail peut être une turbine dite « turbine libre » indépendante du générateur de gaz. Le générateur de gaz comporte généralement au moins un étage de compression alimentant en air compressé une chambre de combustion.

La boîte de transmission de puissance principale inclut un mât rotor mettant en rotation le rotor de sustentation. De plus, la boîte de transmission de puissance peut comporter une sortie pour l'entraînement d'un rotor de contrôle du mouvement en lacet de l'aéronef par exemple.

Des moyens de liaison et de renvoi d'angle sont alors éventuellement interposés entre la turbine de travail et la boîte de transmission de puissance principale. Par exemple, de tels moyens de liaison incluent des organes autorisant des désalignements angulaires entre deux arbres en rotation.

Un moteur à turbine est généralement disposé horizontalement sur un plancher mécanique. Autrement dit, un arbre de sortie du moteur à turbine se situe en position horizontale. A l'inverse, un plancher mécanique porte la boîte de transmission de puissance dans une position sensiblement verticale, le mât rotor mis en rotation par les engrenages de la boîte de transmission étant sensiblement vertical.

Les moteurs à turbine d'ancienne génération présentent généralement une masse et un encombrement importants qui peuvent rendre leur installation délicate. De plus, ces moteurs à turbine d'ancienne génération peuvent présenter une consommation de carburant relativement élevée.

Certains moteurs à turbine modernes sont cependant relativement compacts. On connait notamment des moteurs à turbine comprenant un seul étage de compression et une chambre de combustion dite « inversée » permettant de restreindre fortement l'encombrement de ce moteur à turbine. On nomme un tel moteur à turbine « moteur à turbine compact » par commodité et pour l'identifier aisément.

Pour améliorer les performances d'un moteur à turbine compact et notamment sa consommation en carburant, l'installation motrice peut comprendre un échangeur thermique. Si le moteur à turbine est compact, l'échangeur thermique s'avère au contraire volumineux. L'échangeur thermique permet par exemple de préchauffer de l'air entre la sortie d'un étage de compression du moteur à turbine et une chambre de combustion du moteur à turbine, en utilisant les gaz chauds prélevés à la sortie dudit moteur à turbine.

L'échangeur thermique est alors fixé au moteur à turbine pour réchauffer l'air frais compressé par le générateur de gaz avant son entrée dans la chambre de combustion.

Ainsi, un air frais est aspiré dans le moteur à turbine puis est comprimé par chaque étage de compression. L'air frais comprimé est dirigé dans l'échangeur thermique afin d'être réchauffé avant d'atteindre la chambre de combustion. Dès lors, l'air comprimé est enflammé conjointement avec du carburant de manière à générer un gaz chaud se détendant dans au moins une turbine. Ainsi le moteur à turbine peut comprendre une turbine liée aux étages du compresseur et une turbine libre de travail qui sont mises en rotation par ledit gaz chaud. Le gaz chaud est ensuite collecté par l'échangeur thermique pour réchauffer l'air frais aspiré par le moteur à turbine, avant d'être libéré dans l'atmosphère.

L'ensemble comprenant un moteur à turbine compact et un échangeur s'avère alors encombrant par rapport à un moteur classique, mais peut par contre présenter une consommation de carburant limitée par exemple.

Cependant, l'agencement d'un tel ensemble n'a rien d'évident.

En effet, la mise en place de l'échangeur thermique peut induire une augmentation de la largeur et/ou de la hauteur et/ou de la longueur des capots de l'aéronef. La surface totale, et notamment frontale, de l'aéronef est alors accrue par rapport à une installation classique. Il peut en résulter une augmentation de la traînée aérodynamique de l'aéronef

L'agencement d'un moteur à turbine compact couplé à un échangeur thermique peut aussi engendrer une modification sensible de la position du centre de gravité de l'aéronef pouvant engendrer des impacts néfastes sur la dérive de l'aéronef par exemple. La dérive et l'empennage doivent alors notamment être dimensionnés en conséquence pour garantir la stabilité statique de l'appareil.

Le document EP 1.216.190 décrit un moteur et une boîte de transmission intégrés.

Un moteur à turbine est monté dans un boîtier, un moyen de transmission de puissance étant intégré au boîtier et relié au moteur à turbine. Le moyen de transmission de puissance est monté dans un carter, ce carter et le boîtier étant intégrés ensemble en tant qu'unique unité.

Le moteur à turbine comporte un arbre de sortie horizontal pour entraîner le moyen de transmission de puissance.

Le document FR 2.956.700 décrit un moteur à turbine présentant un arbre de sortie orienté sensiblement verticalement dans des situations d'utilisation normales, cet arbre étant maintenu par un unique palier.

Le document US 5.226.350 décrit un aéronef comprenant un anneau entourant deux rotors contrarotatifs. Un moteur est agencé au sein de l'anneau pour entraîner en rotation un moyeu portant les rotors contrarotatifs. Le moteur est relié au moyeu par un arbre long tolérant des désalignements axiaux, angulaires et/ou de parallélisme entre le moyeu et le moteur.

Le document US 5.108.043 décrit une installation motrice d'un hélicoptère comprenant deux moteurs. Chaque moteur entraîne une boîte de transmission de puissance via un arbre de transmission portant des cannelures à une première extrémité et portant un pignon d'engrenage à l'autre extrémité.

Le document EP 0760 777 présente une boîte de transmission de puissance munie d'un train d'engrenage épicycloïdal. De plus, un moteur peut être relié à la boîte de transmission de puissance par le biais de moyens de renvoi d'angle.

Le document DE 200 06 526 présente un arbre entraînant un rotor par une courroie.

Par suite, ces documents ne fournissent pas un enseignement relatif à l'agencement d'une installation motrice comprenant une boîte de transmission de puissance qui est entraînée en rotation par un moteur à turbine compact coopérant avec un échangeur thermique.

On connait aussi les documents US 2005/115770 A1, US 5823470 A , US 5054716 A, GB 940024 A, US 2011/121127 A1 et FR 2905983 A1.

Le document US 2005/115770 A1 propose une installation munie d'une boîte de transmission basculante.

Le document US 5823470 A décrit un aéronef muni de deux rotors basculants.

Le document US 5054716 A décrit aussi un aéronef convertible muni d'un turbomoteur engrenant une boîte de transmission munie d'un mât.

La présente invention a alors pour objet de proposer une telle installation motrice.

Selon l'invention, une installation motrice est munie d'une boîte de transmission de puissance et d'un moteur à turbine, la boîte de transmission de puissance comprenant un mât rotor sensiblement vertical qui est apte à mettre en rotation un moyeu d'un rotor, le moteur à turbine comprenant un arbre de sortie pour mettre en mouvement ladite boîte de transmission de puissance, l'installation motrice ayant un échangeur thermique fixé sur le moteur à turbine.

Cette installation motrice est notamment remarquable en ce que :
- la boîte de transmission de puissance comporte au moins un étage de réduction de vitesse de rotation qui est agencé dans un carter plat et un pylône reposant sur une face supérieure du carter plat, le pylône étant traversé par le mât rotor,
- le moteur à turbine comporte un carter moteur, l'arbre de sortie saillant du carter moteur, l'arbre de sortie pénétrant dans le carter plat lorsque le carter moteur est disposé sur la face supérieure du carter plat, l'arbre de sortie étant sensiblement parallèle au mât rotor, le carter moteur étant longitudinalement décalé par rapport au pylône et n'étant pas en contact avec ce pylône,
- l'échangeur thermique s'étend longitudinalement en arrière du moteur à turbine, ledit mât rotor étant à l'inverse situé longitudinalement devant le moteur à turbine.

Cette installation n'est pas une installation basculante. En effet, le pylône est immobile par rapport au carter plat, le moteur à turbine étant immobile par rapport au carter plat, et l'installation étant immobile par rapport à un plancher mécanique

Autrement dit, le moteur à turbine est disposé entre le mât rotor et l'échangeur thermique au regard d'une direction longitudinale allant de l'avant vers l'arrière de l'installation motrice et/ou d'un véhicule muni de cette installation motrice. Un observateur regardant l'installation motrice de côté selon une direction transversale peut noter cette caractéristique.

L'échangeur thermique peut être strictement placé dans une position longitudinale en étant agencé dans un plan antéropostérieur de symétrie de l'installation motrice et d'un véhicule.

A titre de variante, l'échangeur thermique est agencé de manière oblique en étant placé dans un plan oblique qui s'étend en élévation et longitudinalement en présentant une angulation avec le plan antéropostérieur. Cette angulation est alors visible par un observateur regardant l'installation motrice selon une direction en élévation.

Le carter plat est qualifié de « plat » dans la mesure où sa dimension en élévation est très faible comparé à ses dimensions longitudinale et transversale.

Par exemple, la dimension en élévation est d'environ 150 millimètres alors que la dimension transversale peut être de l'ordre de 500 millimètres ce qui permet l'insertion d'une grande roue, la dimension longitudinale pouvant être de l'ordre d'un mètre en permettant l'insertion d'un train de pignons. Le pylône peut présenter une dimension en élévation d'environ 400 millimètres et un diamètre de l'ordre de 300 millimètres. Ces données chiffrées sont fournies à titre d'exemple pour notamment illustrer le caractère plat du carter plat.

Cette installation motrice propose un agencement muni de deux modules indépendants avant d'être fixés l'un à l'autre, à savoir une boîte de transmission de puissance et un moteur à turbine tel qu'avantageusement un moteur à turbine compact. Ces deux modules sont donc distincts et présentent deux carters distincts.

Le moteur à turbine et la boîte de transmission sont donc indépendants et autonomes. Par exemple, le moteur à turbine et la boîte de transmission peuvent alors être certifiés indépendamment l'un de l'autre par les autorités compétentes.

Une liaison mécanique mettant en oeuvre un arbre de sortie vertical permet de lier mécaniquement ces deux modules.

Ainsi, le moteur à turbine peut être démonté d'un véhicule, sans impacter la boîte de transmission de puissance, et inversement. Un opérateur peut remplacer un moteur à turbine défectueux par un autre moteur à turbine sans difficulté.

Le moteur à turbine est relié mécaniquement à la boîte de transmission de puissance par un arbre de sortie saillant verticalement du carter moteur. Cette caractéristique confère à l'arbre de sortie une souplesse d'utilisation pouvant tolérer un désalignement entre le moteur à turbine et la boîte de transmission de puissance.

Par ailleurs, cette installation motrice ne nécessite pas d'implémenter des moyens de liaison ou de renvoi d'angle entre le moteur à turbine et la boîte de transmission de puissance puisque l'arbre de sortie du moteur à turbine est inséré directement dans la boîte de transmission de puissance.

En outre, cette installation motrice permet de ne pas dégrader indument les performances aérodynamiques d'un aéronef.

En effet, on rappelle que l'agencement d'un moteur à turbine associé à un échangeur thermique peut impacter la surface frontale d'un aéronef.

Cependant, l'installation motrice selon l'invention suggère de disposer un moteur à turbine dans une position sensiblement verticale contrairement à des réalisations usuelles.

Dès lors, l'échangeur thermique peut s'étendre longitudinalement sensiblement en position horizontale dans le prolongement du moteur à turbine dans des dimensions de capots usuels, et donc dans l'espace alloué usuellement à une installation motrice.

Lorsque l'installation motrice est agencée sur un aéronef, l'échangeur thermique a alors une influence restreinte sur la surface frontale de l'aéronef en se situant dans le prolongement du moteur à turbine.

De plus, le moteur à turbine étant associé à un échangeur thermique, ce moteur à turbine peut être un moteur à turbine compact ayant de fait un encombrement limité. Par conséquent, ce moteur à turbine s'étend verticalement sur une hauteur restant raisonnable. En complément, la boîte de transmission de puissance peut comprendre un carter plat du fait de l'emmanchement direct de l'arbre de sortie dans cette boîte de transmission de puissance. La hauteur de l'installation motrice est ainsi optimisée.

En outre, le moteur à turbine s'étend longitudinalement sur une très courte distance permettant de minimiser l'impact de l'échangeur thermique sur le centrage de l'aéronef. L'ensemble comprenant le moteur à turbine et l'échangeur thermique s'étend en effet longitudinalement sur une distance minimisée par l'agencement vertical du moteur à turbine. Cet agencement a aussi un effet positif sur la position du centre de gravité de l'aéronef, contrairement à des solutions ayant un impact sur la dérive et l'empennage d'un aéronef. En effet, le bras de levier de l'ensemble comprenant un moteur à turbine et un échangeur par rapport à un mât rotor tend à être réduit, ce qui permet de rapprocher le centre de gravité de l'aéronef de l'axe de rotation du rotor.

Par conséquent, la synergie de ces organes de cette installation motrice permet d'obtenir une installation motrice pouvant présenter de multiples avantages inattendus.

L'installation motrice peut de plus comporter une ou plusieurs des caractéristiques qui suivent.

Ainsi, l'installation motrice peut comporter une cloison pare-feu agencée entre le carter moteur et ledit pylône. En effet, le carter moteur et le pylône sont éloignés l'un de l'autre ce qui permet l'insertion d'une cloison pare-feu.

Cette cloison pare-feu peut comporter plusieurs pans pour être interposée de manière plus générale entre la boîte de transmission de puissance et le moteur à turbine. Dès lors, la cloison pare feu est pourvue par exemple d'un pan vertical séparant le moteur à turbine du pylône de la boîte de transmission de puissance, voire notamment un pan horizontal interposé entre le moteur à turbine et le carter plat.

Par ailleurs, le carter plat s'étend éventuellement longitudinalement d'un tronçon avant portant le pylône vers un tronçon arrière portant le moteur à turbine. Cette caractéristique permet notamment de bien séparer le carter moteur du pylône.

De plus, le carter plat peut alors accueillir un étage de réduction de puissance muni d'une grande roue. Une telle grande roue présente l'avantage d'être robuste et moins onéreuse qu'un engrenage épicycloïdal par exemple.

L'arbre de sortie peut alors engrener la grande roue directement, ou indirectement via une roue libre par exemple. Une telle roue libre présente l'avantage d'autoriser une autorotation d'un rotor de sustentation en cas de blocage accidentel du moteur à turbine.

En effet, l'installation motrice peut comporter une liaison cannelée disposée entre l'arbre de sortie et la boîte de transmission de puissance.

Une telle liaison cannelée comporte par exemple un embout cannelé solidaire de l'arbre de sortie

Selon une réalisation, l'embout cannelé engrène une grande roue, dénommée parfois « engrenage à grande roue dentée ». La grande roue est une roue circulaire dentée présentant de fait un grand rapport de démultiplication.

Par contre, selon une autre réalisation, cet embout cannelé engrène une roue libre de la boîte de transmission de puissance, cette roue libre engrenant un étage de réduction de vitesse de rotation. Dès lors, la roue libre engrène par exemple une grande roue.

Par ailleurs, le moteur à turbine peut comprendre une turbine à gaz munie d'un générateur de gaz et d'une turbine de travail solidaire d'un arbre de travail.

L'arbre de travail et l'arbre de sortie peuvent être confondus et former un même arbre.

Cependant, l'arbre de travail et l'arbre de sortie peuvent être distincts. Dès lors, l'arbre de travail est favorablement sensiblement parallèle au mât rotor, et donc à l'arbre de sortie.

Le mât rotor, l'arbre de sortie et l'arbre de travail étant parallèles les uns aux autres, l'installation motrice ne nécessite pas de moyens de renvoi d'angle pour les relier deux à deux.

Par suite, le moteur à turbine comporte éventuellement un réducteur de vitesse à engrenages qui est interposé dans le carter moteur entre l'arbre de travail et l'arbre de sortie. On comprend que le carter moteur peut alors posséder un carter dénommé « carter de turbine » enserrant la turbine à gaz, et un carter dénommé « carter de réducteur » enserrant le réducteur de vitesse. Le carter de turbine et le carter de réducteur sont solidaires l'un de l'autre. Le moteur à turbine est ainsi modulaire en possédant un module « turbine à gaz » et un module « réducteur de vitesse ».

Dès lors, la vitesse de rotation de l'arbre de travail peut être de l'ordre de 10000 à 50000 tours par minute, alors que la vitesse de rotation de l'arbre de sortie est réduite à 6000 à 9000 tours par minute par exemple. Les engrenages de la boîte de transmission de puissance peuvent alors réduire cette vitesse de rotation pour atteindre une vitesse de rotation de l'ordre de 400 tours par minute au niveau du mât rotor par exemple.

Par ailleurs, l'installation motrice peut comporter un moyen de liaison pour fixer le carter moteur au carter plat, ce moyen de liaison incluant une couronne de vis et une pluralité de pions de centrage. Ce moyen de liaison permet de guider le moteur à turbine vers la position adéquate à l'aide des pions de guidage, et de fixer ce moteur à turbine à la boîte de transmission de puissance à l'aide de la couronne de vis.

Une cloison pare-feu peut être disposée à l'interface entre le moteur à turbine et la boîte de transmission de puissance.

En outre, l'arbre de sortie peut saillir dudit carter moteur sur une hauteur supérieure à 10 centimètres.

L'arbre de sortie est alors suffisamment long pour être flexible. Un tel arbre de sortie peut ainsi autoriser la présence de déformées angulaires lors du montage du moteur à turbine sur la boîte de transmission de puissance.

Le positionnement du moteur à turbine par rapport à la boîte de transmission doit être relativement précis pour ne pas induire un dysfonctionnement. Un désalignement trop important peut en effet générer des efforts importants sur les organes de la boîte de transmission de puissance risquant de conduire à une usure prématurée.

La présence d'un arbre de sortie « long » permet d'offrir une certaine latitude de réglage à un opérateur. De plus, la présence de pions de guidage favorise un positionnement correct du moteur à turbine.

Par ailleurs, l'installation motrice peut comporter un premier système de lubrification de la boîte de transmission de puissance et un deuxième système de lubrification du moteur à turbine.

La structure modulaire de l'installation motrice permet la mise en place de systèmes de lubrification personnalisés.

Ainsi, le premier système de lubrification comporte éventuellement une huile minérale présentant une haute résistance à des pressions d'engrènement, ledit deuxième système de lubrification du moteur à turbine comportant une huile synthétique présentant une faible viscosité et une bonne résistance aux hautes températures.

Le moteur à turbine peut comporter un joint dynamique traversé par l'arbre de sortie pour isoler un espace interne du moteur à turbine d'un milieu extérieur au moteur à turbine. Ainsi, le joint dynamique vise par exemple à éviter une fuite d'un liquide de lubrification.

En outre, le pylône comporte éventuellement des moyens de suspension de la boîte de transmission de puissance à un plancher mécanique. De tels moyens de suspension peuvent inclure des barres de suspension obliques s'étendant du pylône vers un plancher.

Le carter plat peut aussi comprendre un dispositif de suspension permettant de le suspendre à un plancher.

L'invention vise aussi un aéronef muni d'un rotor de sustentation comprenant un moyeu et une pluralité de pales. Cet aéronef comporte une installation motrice du type décrit précédemment.

Dès lors, ledit aéronef peut comporter un plancher mécanique portant ladite installation motrice, cette installation motrice étant immobile par rapport audit plancher mécanique.

L'installation motrice n'est donc pas un ensemble basculant au sens des documents US 2005/115770 A1, US 5823470 A , US 5054716 A par exemple.

L'invention et ses avantages apparaîtront avec plus de détails dans le cadre de la description qui suit avec des exemples de réalisations donnés à titre illustratif en référence aux figures annexées qui représentent :
- la figure 1, un schéma présentant un aéronef selon l'invention,
- la figure 2, une vue d'une boîte de transmission de puissance selon l'invention,
- les figures 3 et 4, une vue d'un moteur à turbine couplé à un échangeur thermique,
- la figure 5, une vue d'une installation motrice, et
- la figure 6, une coupe présentant un arbre de sortie engrenant la boîte de transmission de puissance.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale.

La deuxième direction Y est dite transversale.

Enfin, la troisième direction Z est dite en élévation. L'expression « en élévation » est relative à toute direction parallèle à la troisième direction Z.

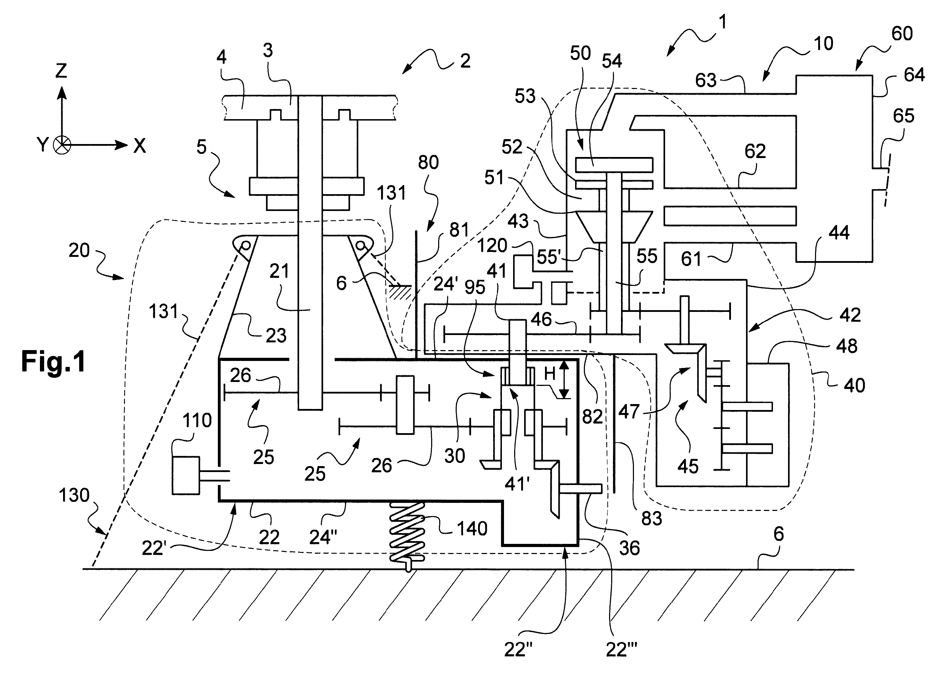

La figure 1 présente un aéronef 1 muni d'une installation motrice entraînant un rotor 2. Les autres organes de l'aéronef ne sont pas représentés pour ne pas alourdir la figure 1.

Le rotor 2 possède un moyeu 3 portant une pluralité de pales 4. De plus, le rotor 2 comporte par exemple un ensemble de plateaux de commande 5 pour contrôler le pas des pales 4 cycliquement et/ou collectivement.

Pour mettre en rotation le rotor 2, l'aéronef est équipé d'une installation motrice 10 porté par un plancher mécanique 6.

Cette installation motrice 10 possède un moteur à turbine 40 couplé à un échangeur thermique. Cet échangeur thermique permet de réchauffer l'air comprimé par un générateur de gaz du moteur à turbine avant son admission dans une chambre de combustion.

Le moteur à turbine met alors en rotation une boîte de transmission de puissance 20 munie d'un mât rotor 21 portant le moyeu 3.

A cet effet, la boîte de transmission de puissance 20 est pourvue d'au moins un étage 25 de réduction de la vitesse de rotation pour entraîner le mât rotor 21 à une vitesse de l'ordre de 400 tours par minute. Chaque étage 25 de réduction de la vitesse de rotation comporte des engrenages agencés dans un carter plat 22.

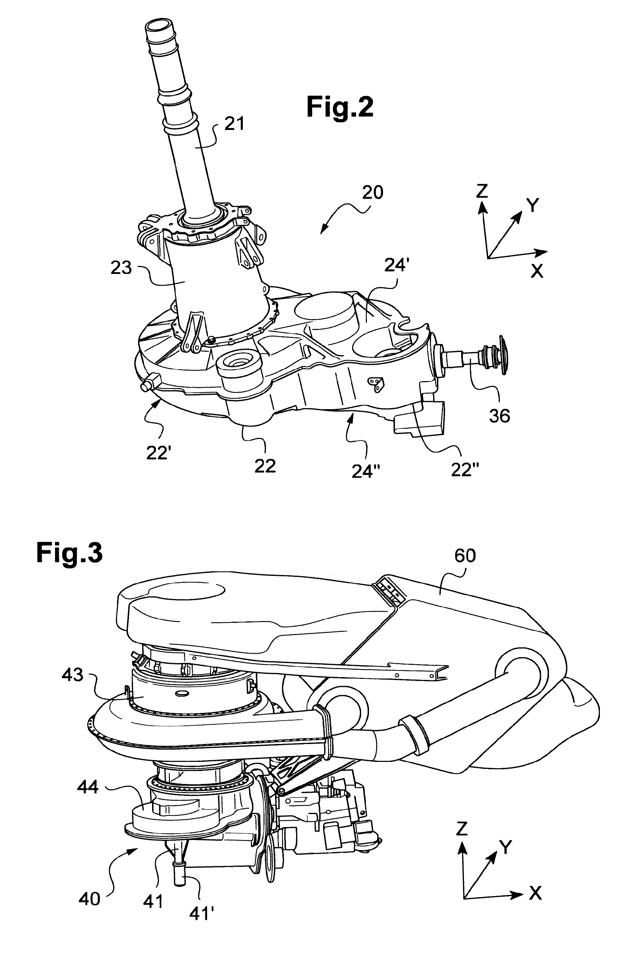

En référence à la figure 2, le carter plat s'étend en élévation d'une face inférieure 24" vers une face supérieure 24', et longitudinalement d'un tronçon avant 22' vers un tronçon arrière 22". La dimension en élévation du carter plat est inférieure aux dimensions longitudinale et transversale de ce carter plat. C'est la raison pour laquelle le carter est qualifié de « carter plat ».

En outre, le mât rotor 21 traverse un pylône 23 fixé à la face supérieure 24' du carter plat 22. Ce mât rotor 21 s'étend alors le long d'une direction en élévation sensiblement dirigée selon la pesanteur lorsque l'aéronef est au sol.

En référence à la figure 1, le moteur à turbine 40 est muni d'une turbine à gaz 50 disposée dans un carter moteur 42.

De plus, le moteur à turbine 40 est pourvu d'un arbre de sortie 41 mis en rotation par la turbine à gaz 50. Cet arbre de sortie saille alors du carter moteur 42, préférentiellement sur une hauteur H supérieure à 10 centimètres.

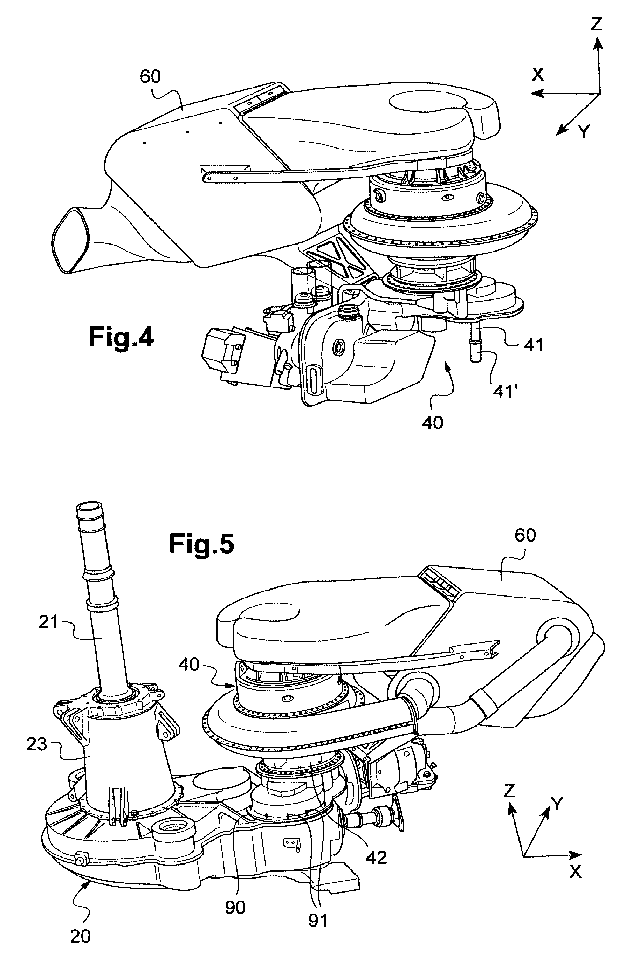

Par suite, l'arbre de sortie 41 est inséré dans le carter plat. Le carter moteur est alors fixé sur la face supérieure 24' du carter plat. Par exemple, l'installation motrice comporte un moyen de fixation incluant une couronne 90 de vis et une pluralité de pions 91 de centrage visibles sur la figure 5 notamment.

Les pions de centrage ont pour fonction de positionner correctement le carter moteur par rapport au carter plat.

En référence à la figure 1, l'arbre de sortie 41 est alors parallèle au mât rotor 21. Cependant, cet arbre de sortie 41 est décalé notamment longitudinalement par rapport au mât rotor 21. En effet, le pylône 23 est fixé au tronçon avant 22' du carter plat, alors que le moteur à turbine 40 est fixé au tronçon arrière 22" du carter plat 22.

Par conséquent, le carter moteur 42 est longitudinalement décalé par rapport au pylône 23, et n'est pas en contact avec ce pylône 23.

Cet agencement permet notamment de disposer une cloison pare-feu 80 entre le carter moteur 42 et le pylône 23.

Cette cloison pare-feu peut, plus généralement, séparer le moteur à turbine 40 de la boîte de transmission de puissance 20 pour isoler le moteur à turbine dans un compartiment définissant une zone dite « zone chaude ».

Par exemple, la cloison pare-feu comprend alors plusieurs pans 81, 82, 83 tels qu'un pan vertical 81 séparant le carter moteur 42 et le pylône 23, un pan horizontal 82 séparant la face supérieure 24' du carter plat du moteur à turbine puis un autre pan vertical 83 séparant le carter moteur 42 et une face latérale 22'" du carter plat 22.

De plus, cet agencement permet d'implémenter au moins un étage 25 de réduction de vitesse de rotation comprenant une roue dentée de grand diamètre dénommé usuellement « grande roue 26 ».

Dès lors, l'arbre de sortie 41 du moteur à turbine 40 peut engrener directement ou indirectement une grande roue 26.

Par conséquent, l'installation motrice inclut une liaison cannelée 95 entre l'arbre de sortie 41 et la boîte de transmission de puissance 20.

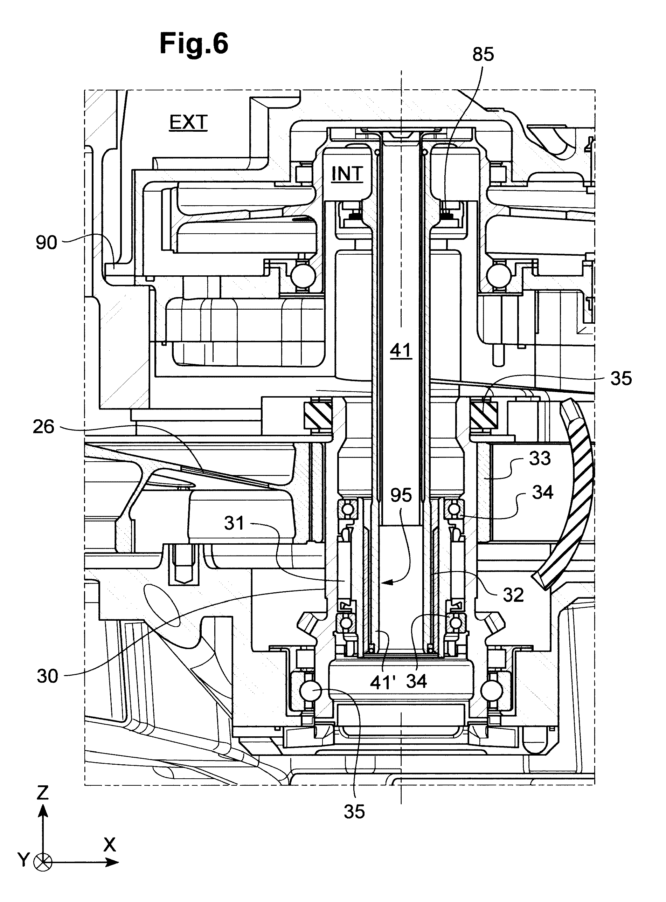

La liaison cannelée présentée sur la figure 6 inclut un embout cannelé 95 solidaire de l'arbre de sortie 41. Cet embout cannelé 95 peut alors être une partie de l'arbre de sortie 41.

De plus, la liaison cannelée peut aussi inclure une roue libre 30. La roue libre 30 comprend une partie menante 32 coopérant avec une partie menée 33 via des rouleaux ou des galets 31. La roue libre 30 peut aussi comprendre des moyens de roulement 34 interposés entre la partie menante 32 et la partie menée 33. Par ailleurs des moyens de roulement 35 peuvent aussi guider la rotation de la partie menée 33.

L'embout cannelé 95 de l'arbre de sortie 41 est alors en prise avec la partie menante 32 de la roue libre 30 de la boîte de transmission de puissance. La partie menée de la roue libre 30 engrène alors une roue dentée 26.

Par ailleurs, le moteur à turbine 40 peut comprendre un joint dynamique 85 pour isoler l'intérieur INT du moteur à turbine 40 d'un milieu EXT situé à l'extérieur de ce moteur à turbine 40. Ce joint dynamique 85 est alors traversé par l'arbre de sortie 41.

En référence à la figure 1, la partie menée de la roue libre 30 peut aussi engrener des engrenages pour mettre en rotation un arbre annexe 36. Cet arbre annexe peut mettre en rotation un rotor de contrôle du mouvement en lacet de l'aéronef 1 par exemple.

Cet agencement permet donc d'obtenir une installation motrice munie d'un moteur à turbine compact s'étendant en élévation à partir d'un carter plat d'une boîte de transmission de puissance.

De plus, cet agencement permet de minimiser les impacts de l'installation d'un échangeur thermique 60 sur ce moteur à turbine. En effet, l'échangeur thermique 60 s'étend longitudinalement à partir du moteur à turbine 40 dans le prolongement de ce moteur à turbine 40 et du mât rotor 21.

Par suite, le mât rotor 21 se trouve longitudinalement devant le moteur à turbine 40, alors que l'échangeur thermique 60 se trouve longitudinalement en arrière du moteur à turbine 40.

Ainsi, l'invention permet l'agencement d'un moteur à turbine compact coopérant avec un échangeur thermique.

Ce moteur à turbine 40 peut comprendre une turbine à gaz agencée au sein du carter moteur pour l'entraînement de l'arbre de sortie.

Cette turbine à gaz 50 est équipée d'un générateur de gaz suivie d'au moins une turbine. Le générateur de gaz aspire l'air frais à partir d'un milieu EXT extérieur au moteur à turbine pour générer des gaz chauds mettant en rotation au moins une turbine, 53, 54. Ainsi, le générateur de gaz comporte d'une part un compresseur 51 muni d'au moins un étage de compression et, d'autre part, une chambre de combustion 52.

De plus, le moteur à turbine peut posséder une turbine d'entrainement 53 liée au compresseur puis une turbine de travail 54 solidaire d'un arbre de travail 55.

La turbine à gaz s'étend en élévation. La chambre de combustion est par exemple située au dessus du compresseur, la turbine de travail étant située au dessus de la chambre de combustion. L'arbre de travail traverse alors la chambre de combustion et le compresseur en étant dirigé parallèlement au mât rotor 21.

Par ailleurs, l'arbre de travail 55 peut être confondu avec l'arbre de sortie 41.

Toutefois, un réducteur 45 de vitesse à engrenages est éventuellement interposé dans le carter moteur 42 entre l'arbre de travail 55 et l'arbre de sortie 41. Le réducteur 45 de vitesse peut ainsi comprendre des engrenages 46 pour entraîner l'arbre de sortie 41 sous l'impulsion de l'arbre de travail.

De même, le moteur à turbine peut comprendre des engrenages 47 qui sont engrenés par un arbre intermédiaire 55' du générateur de gaz et qui sont mécaniquement reliés à des accessoires 48.

En référence aux figures 3 et 4, le carter moteur 42 peut alors être scindé en un carter turbine 43 enserrant la turbine à gaz, et un carter de réducteur 44 enserrant le réducteur 45 de vitesse. Les engrenages 47 peuvent être agencés dans le carter de réducteur. Le carter turbine représente alors un carter supérieur enserrant la turbine à gaz, le carter réducteur représentant un carter inférieur enserrant un réducteur 45 de vitesse et des engrenages reliés à des accessoires.

En référence à la figure 1, l'échangeur thermique peut viser à réchauffer l'air frais comprimé par le compresseur de la turbine à gaz avant son entrée dans la chambre de combustion.

Dès lors, l'échangeur thermique 60 comporte un bloc d'échange thermique 64 alimenté en air frais provenant du compresseur 51 par une première conduite d'entrée 61. Le bloc d'échange thermique 64 alimente au contraire en air chaud la chambre de combustion 52 par une première conduite de sortie 62.

Pour réchauffer l'air frais, le bloc d'échange thermique 64 est alimenté en gaz chaud provenant de la turbine à gaz par une deuxième conduite d'entrée 63. Le bloc d'échange thermique 64 expulse le gaz chaud vers l'atmosphère au travers d'une deuxième conduite de sortie 65.

On se référera à la littérature pour obtenir une description d'un tel échangeur.

Par ailleurs, l'installation motrice 10 présentée sur la figure 1 comporte un premier système 110 de lubrification pour lubrifier la boîte de transmission de puissance 20. Ce premier système 110 de lubrification injecte par exemple une huile minérale dans le carter plat 22 pour lubrifier les engrenages des étages de réduction 25.

De même, l'installation motrice possède un deuxième système 120 de lubrification pour lubrifier le moteur à turbine 40. Le deuxième système 120 injecte par exemple une huile synthétique dans le carter moteur.

En outre, l'installation motrice peut être fixée à un plancher 6 d'un aéronef par des moyens de suspension 130. Ces moyens de suspension 130 incluent par exemple des barres de suspension 131 s'étendant obliquement du pylône 23 vers le plancher mécanique 6. Ces moyens de suspension peuvent inclure des organes antivibratoires.

De plus, des organes de suspension 140 sont éventuellement interposés entre le carter plat 22 et le plancher mécanique 6, par exemple entre la face inférieure 24" et ce plancher mécanique 6.

Bien que suspendu, l'installation motrice est immobile par rapport au plancher mécanique, au sens où cette installation ne comporte pas un organe qui bascule pour déplacer un rotor d'une position sustentatrice vers une position tractive par exemple.

Ainsi, le pylône et le moteur à turbine sont immobiles par rapport au carter plat, et de sont pas basculants.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme définit par les revendications suivantes.

## Revendications

1. Installation motrice (10) munie d'une boîte de transmission de puissance (20) et d'un moteur à turbine (40), la boîte de transmission de puissance (20) comprenant un mât rotor (21) sensiblement vertical qui est apte à mettre en rotation un moyeu (3) d'un rotor (2), le moteur à turbine (40) comprenant un arbre de sortie (41) pour mettre en mouvement ladite boîte de transmission de puissance (20), ladite installation motrice (10) ayant un échangeur thermique (60) fixé sur ledit moteur à turbine (40), **caractérisée en ce que** :
- ladite boîte de transmission de puissance (20) comporte au moins un étage (25) de réduction de vitesse de rotation agencé dans un carter plat (22) et un pylône (23) reposant sur une face supérieure (24') dudit carter plat (22), ledit pylône (23) étant traversé par ledit mât rotor (21),
- ledit moteur à turbine (40) comporte un carter moteur (42), ledit arbre de sortie (41) saillant dudit carter moteur (42), ledit arbre de sortie (41) pénétrant dans ledit carter plat (22) lorsque ledit carter moteur (42) est disposé sur ladite face supérieure (24'), ledit arbre de sortie (41) étant sensiblement parallèle au mât rotor (21), ledit carter moteur (42) étant longitudinalement décalé par rapport au pylône (23) et n'étant pas en contact avec ce pylône (23),
- ledit échangeur thermique (60) s'étend longitudinalement en arrière dudit moteur à turbine (40), ledit mât rotor (21) étant à l'inverse situé longitudinalement devant ledit moteur à turbine (40).

2. Installation motrice selon la revendication 1,
**caractérisée en ce que** ladite installation motrice (10) comporte une cloison pare-feu (80) agencée entre le carter moteur (42) et ledit pylône (23).

3. Installation motrice selon l'une quelconque des revendications 1 à 2,
**caractérisée en ce que** ledit carter plat (22) s'étend longitudinalement d'un tronçon avant (22') portant ledit pylône (23) vers un tronçon arrière (22") portant ledit moteur à turbine (40).

4. Installation motrice selon l'une quelconque des revendications 1 à 3,
**caractérisée en ce que** ledit moteur à turbine (40) comprend une turbine à gaz (50) munie d'un générateur de gaz (51, 52) et d'une turbine de travail (54) solidaire d'un arbre de travail (55), ledit arbre de travail (55) étant sensiblement parallèle au mât rotor (21).

5. Installation motrice selon l'une quelconque des revendications 1 à 4,
**caractérisée en ce que** ledit moteur à turbine (40) comporte un réducteur (45) de vitesse à engrenages qui est interposé dans le carter moteur (42) entre ledit arbre de travail (55) et ledit arbre de sortie (41).

6. Installation motrice selon l'une quelconque des revendications 1 à 5,
**caractérisée en ce que** ledit moteur à turbine (40) comporte un joint (85) dynamique traversé par ledit arbre de sortie (41) pour isoler un espace interne du moteur à turbine d'un milieu extérieur au moteur à turbine (40).

7. Installation motrice selon l'une quelconque des revendications 1 à 6,
**caractérisé en ce que** ladite installation motrice (10) comporte un moyen de liaison pour fixer le carter moteur (42) au carter plat (22), ledit moyen de liaison incluant une couronne (90) de vis et une pluralité de pions (91) de centrage.

8. Installation motrice selon l'une quelconque des revendications 1 à 7,
**caractérisée en ce que** ladite installation motrice (10) comporte une liaison cannelée (95) entre ledit arbre de sortie (41) et ladite boîte de transmission de puissance (20).

9. Installation motrice selon la revendication 8,
**caractérisée en ce que** ladite liaison cannelée (95) comporte un embout cannelé (95) solidaire de l'arbre de sortie (41), cet embout cannelé (41') engrenant une roue libre (30) de la boîte de transmission de puissance (20), ladite roue libre (30) engrenant un étage (25) de réduction de vitesse de rotation.

10. Installation motrice selon la revendication 9,
**caractérisée en ce que** ladite roue libre (30) engrène une grande roue (26).

11. Installation motrice selon l'une quelconque des revendications 1 à 10,
**caractérisée en ce que** ledit arbre de sortie (41) saille dudit carter moteur (42) sur une hauteur (H) supérieure à 10 centimètres.

12. Installation motrice selon l'une quelconque des revendications 1 à 11,
**caractérisée en ce que** ladite installation motrice (10) comporte un premier système (110) de lubrification de la boîte de transmission de puissance (20) et un deuxième système (120) de lubrification du moteur à turbine (40).

13. Installation motrice selon la revendication 12,
**caractérisée en ce que** ledit premier système (110) de lubrification comporte une huile minérale, ledit deuxième système (120) de lubrification du moteur à turbine comportant une huile synthétique.

14. Installation motrice selon l'une quelconque des revendications 1 à 13,
**caractérisée en ce que** ledit pylône (23) comporte des moyens de suspension (130) de la boîte de transmission de puissance (20) à un plancher mécanique (6).

15. Installation motrice selon l'une quelconque des revendications 1 à 14,
**caractérisée en ce que** ledit pylône et ledit moteur à turbine sont immobiles par rapport audit carter plat.

16. Aéronef (1) muni d'un rotor (2) de sustentation comprenant un moyeu (2) et une pluralité de pales (4),
**caractérisé en ce que** ledit aéronef (1) comporte une installation motrice (10) selon l'une quelconque des revendications 1 à 15.

17. Aéronef selon la revendication 16,
**caractérisé en ce que** ledit aéronef comporte un plancher mécanique portant ladite installation motrice (10), cette installation motrice étant immobile par rapport audit plancher mécanique.

## Patentansprüche

1. Antriebsanlage (10) mit einem Leistungsgetriebe (20) und einem Turbinenmotor (40), wobei das Leistungsgetriebe (20) eine im Wesentlichen senkrechte Rotorwelle (21) aufweist, die die Nabe (3) eines Rotors (2) bewegen kann, wobei der Turbinenmotor (40) eine Ausgangswelle (41) aufweist, um das Leistungsgetriebe (20) in Bewegung zu setzen, wobei die Antriebsanlage (10) einen Wärmetauscher (60) aufweist, der auf dem Turbinenmotor (40) befestigt ist, **dadurch gekennzeichnet dass**:
- das Leistungsgetriebe (20) mindestens eine Drehgeschwindigkeitsreduktionsstufe (25) aufweist, die in einem flachen Gehäuse (22) angeordnet ist und einen Pfeiler (23), der auf einer oberen Fläche (24') des flachen Gehäuses (22) ruht, wobei der Pfeiler (23) von der Rotorwelle (21) durchquert wird,
- der Turbinenmotor (40) ein Motorgehäuse (42) aufweist, wobei die Ausgangswelle (41) aus dem Motorgehäuse (42) herausragt, wobei die Ausgangswelle (41) in das flache Gehäuse (22) eindringt, wenn das Motorgehäuse (42) auf der oberen Fläche (24') angeordnet ist, wobei die Ausgangswelle (41) im Wesentlichen parallel zu der Rotorwelle (21) ist, wobei das Motorgehäuse (42) in Längsrichtung gegenüber dem Pfeiler (23) versetzt und nicht mit diesem in Kontakt ist,
- der Wärmetauscher (60) sich in Längsrichtung hinter dem Turbinenmotor (40) erstreckt, wobei die Rotorwelle (21) umgekehrt in Längsrichtung gesehen vor dem Turbinenrotor (40) angeordnet ist.

2. Antriebsanlage nach Anspruch 1,
**dadurch gekennzeichnet, dass** die Antriebsanlage (10) eine Feuerschutzwand (80) aufweist, die zwischen dem Motorgehäuse (42) und dem Pfeiler (23) angeordnet ist.

3. Antriebsanlage nach einem der Ansprüche 1 bis 2,
**dadurch gekennzeichnet, dass** das flache Gehäuse (22) sich in Längsrichtung von einem vorderen Abschnitt (22'), der den Pfeiler (23) trägt, zu einem hinteren Abschnitt (22"), der den Turbinenmotor (40) trägt, erstreckt.

4. Antriebsanlage nach einem der Ansprüche 1 bis 3,
**dadurch gekennzeichnet, dass** der Turbinenmotor (40) eine Gasturbine (50) aufweist, die mit einem Gasgenerator (51, 52) und einer Arbeitsturbine (54), die mit einer Arbeitswelle (55) fest verbunden ist, versehen ist, wobei die Arbeitswelle (55) im Wesentlichen parallel zu der Rotorwelle (21) verläuft.

5. Antriebsanlage nach einem der Ansprüche 1 bis 4,
**dadurch gekennzeichnet, dass** der Turbinenmotor (40) ein Reduktionszahnradgetriebe (45) aufweist, das in dem Motorgehäuse (42) zwischen der Arbeitswelle (55) und der Ausgangswelle (41) angeordnet ist.

6. Antriebsanlage nach einem der Ansprüche 1 bis 5,
**dadurch gekennzeichnet, dass** der Turbinenmotor (40) eine dynamische Verbindung (85) aufweist, die von der Ausgangswelle (41) durchquert wird, um einen Innenraum des Turbinenmotors von einer äußeren Umgebung des Turbinenmotors (40) zu isolieren.

7. Antriebsanlage nach einem der Asnrpüche 1 bis 6,
**dadurch gekennzeichnet, dass** die Antriebsanlage (10) ein Verbindungsmittel aufweist, um das Motorgehäuse (42) an dem flachen Gehäuse (22) zu befestigen, wobei das Verbindungsmittel einen Schraubkranz (90) und eine Mehrzahl von Zentrierstiften (91) aufweist.

8. Antriebsanlage nach einem der Ansprüche 1 bis 7,
**dadurch gekennzeichnet, dass** die Antriebsanlage (10) eine geriffelte Verbindung (95) zwischen der Ausgangswelle (41) und dem Leistungsgetriebe (20) aufweist.

9. Antriebsanlage nach Anspruch 8,
**dadurch gekennzeichnet, dass** die geriffelte Verbindung (95) ein geriffelte Endstück (95) aufweist, das mit der Ausgangswelle (41) fest verbunden ist, wobei dieses geriffelte Endstück (41') mit einem Freilaufrad (30) des Leistungsgetriebes (20) kämmt, wobei das Freilaufrad (30) in Eingriff mit einer Drehgeschwindigkeitsreduktionsstufe (25) steht.

10. Antriebsanlage nach Anspruch 9,
**dadurch gekennzeichnet, dass** das Freilaufrad (30) ein großes Rad (26) kämmt.

11. Antriebsanlage nach einem der Ansprüche 1 bis 10,
**dadurch gekennzeichnet, dass** die Ausgangswelle (41) aus dem Motorgehäuse (42) mit einer Höhe (H) von mehr als 10 Zentimetern vorsteht.

12. Antriebsanlage nach einem der Ansprüche 1 bis 11,
**dadurch gekennzeichnet, dass** die Antriebsanlage (10) ein erstes Schmiersystem (110) des Leistungsgetriebes (20) und ein zweites Schmiersystem (120) des Turbinenmotors (40) aufweist.

13. Antriebsanlage nach Anspruch 12,
**dadurch gekennzeichnet, dass** das erste Schmiersystem (110) ein Mineralöl aufweist, und das zweite Schmiersystem des Turbinenmotors ein Synthetiköl aufweist.

14. Antriebsanlage nach einem der Ansprüche 1 bis 13,
**dadurch gekennzeichnet, dass** der Pfeiler (23) Aufhängungsmittel (130) des Leistungsgetriebes (20) an einem Maschinenboden (6) aufweist.

15. Antriebsanlage nach einem der Ansprüche 1 bis 14,
**dadurch gekennzeichnet, dass** der Pfeiler und der Turbinenmotor bezüglich des flachen Gehäuses unbeweglich sind.

16. Luftfahrzeug (1) mit einem den Auftrieb gewährleistenden Rotor (2) mit einer Nabe (2) und einer Mehrzahl von Rotorblättern (4),
**dadurch gekennzeichnet, dass** das Luftfahrzeug (1) eine Antriebsanlage (10) nach einem der Ansprüche 1 bis 15 aufweist.

17. Luftfahrzeug nach Anspruch 16,
**dadurch gekennzeichnet, dass** das Luftfahrzeug einen Maschinenboden aufweist, der die Antriebsanlage (10) trägt, wobei die Antriebsanlage gegenüber dem Maschinenboden unbeweglich ist.

## Claims

1. A power plant (10) provided with a power transmission gearbox (20) and a turbine engine (40), the power transmission gearbox (20) comprising a substantially vertical rotor mast (21) which is suitable for causing a hub (3) of a rotor (2) to rotate, the turbine engine (40) comprising an output shaft (41) for setting said power transmission gearbox (20) in motion, said power plant (10) having a heat exchanger (60) fastened to said turbine engine (40),
**characterised in that**:
- said power transmission gearbox (20) comprises at least one speed-of-rotation reduction stage (25) arranged in a flat casing (22), and a pylon (23) standing on an upper face (24') of said flat casing (22), said pylon (23) having said rotor mast (21) passing therethrough,
- said turbine engine (40) comprises an engine casing (42), said output shaft (41) projecting from said engine casing (42), said output shaft (41) penetrating into said flat casing (22) when said engine casing (42) is arranged on said upper face (24'), said output shaft (41) being substantially parallel to the rotor mast (21), said engine casing (42) being offset longitudinally relative to the pylon (23) and not being in contact with this pylon (23),
- said heat exchanger (60) extends longitudinally to the rear of said turbine engine (40), said rotor mast (21) being conversely located longitudinally in front of said turbine engine (40).

2. A power plant according to Claim 1,
**characterised in that** said power plant (10) comprises a firewall (80) arranged between the engine casing (42) and said pylon (23).

3. A power plant according to any one of Claims 1 to 2,
**characterised in that** said flat casing (22) extends longitudinally from a front portion (22') bearing said pylon (23) towards a rear portion (22") bearing said turbine engine (40).

4. A power plant according to any one of Claims 1 to 3,
**characterised in that** said turbine engine (40) comprises a gas turbine (50) provided with a gas generator (51, 52) and with a working turbine (54) integral with a working shaft (55), said working shaft (55) being substantially parallel to the rotor mast (21).

5. A power plant according to any one of Claims 1 to 4,
**characterised in that** said turbine engine (40) comprises a speed reducer gear (45) which is interposed in the engine casing (42) between said working shaft (55) and said output shaft (41).

6. A power plant according to any one of Claims 1 to 5,
**characterised in that** said turbine engine (40) comprises a dynamic seal (85) through which said output shaft (41) passes in order to isolate an inner space of the turbine engine from a medium external to the turbine engine (40).

7. A power plant according to any one of Claims 1 to 6,
**characterised in that** said power plant (10) comprises a connection means for fastening the engine casing (42) to the flat casing (22), said connection means including a ring (90) of bolts and a plurality of centring pins (91).

8. A power plant according to any one of Claims 1 to 7,
**characterised in that** said power plant (10) comprises a fluted connection (95) between said output shaft (41) and said power transmission gearbox (20).

9. A power plant according to Claim 8,
**characterised in that** said fluted connection (95) comprises a fluted end piece (95) integral with the output shaft (41), this fluted end piece (41') meshing with a freewheel (30) of the power transmission gearbox (20), said freewheel (30) meshing with a speed-of-rotation reduction stage (25).

10. A power plant according to Claim 9,
**characterised in that** said freewheel (30) meshes with a large wheel (26).

11. A power plant according to any one of Claims 1 to 10,
**characterised in that** said output shaft (41) protrudes from said engine casing (42) over a height (H) greater than 10 centimetres.

12. A power plant according to any one of Claims 1 to 11,
**characterised in that** said power plant (10) comprises a first lubrication system (110) for the power transmission gearbox (20) and a second lubrication system (120) for the turbine engine (40).

13. A power plant according to Claim 12,
**characterised in that** said first lubrication system (110) comprises a mineral oil, said second lubrication system (120) for the turbine engine comprising a synthetic oil.

14. A power plant according to any one of Claims 1 to 13,
**characterised in that** said pylon (23) comprises suspension means (130) for suspending the power transmission gearbox (20) from a support platform (6).

15. A power plant according to any one of Claims 1 to 14,
**characterised in that** said pylon and said turbine engine are immobile relative to said flat casing.

16. An aircraft (1) provided with a lift rotor (2) comprising a hub (2) and a plurality of blades (4),
**characterised in that** said aircraft (1) comprises a power plant (10) according to any one of Claims 1 to 15.

17. An aircraft according to Claim 16,
**characterised in that** said aircraft comprises a support platform bearing said power plant (10), this power plant being immobile relative to said support platform.
